# EUROPÄISCHE PATENTSCHRIFT

(11) **EP 2 794 371 B1**
(45) Veröffentlichungstag und Bekanntmachung des Hinweises auf die Patenterteilung: **29.06.2016**
(21) Anmeldenummer: 12778315.7
(22) Anmeldetag: 22.10.2012
(51) Int. Cl.: B60T 8/40, F04B 1/04

(54) **KOLBENPUMPE FÜR EINE FAHRZEUGBREMSANLAGE**
PISTON PUMP FOR A VEHICLE BRAKE SYSTEM
POMPE À PISTON POUR SYSTÈME DE FREINAGE DE VÉHICULE

(30) Priorität: 20.12.2011 DE 102011089224
(43) Veröffentlichungstag der Anmeldung: 29.10.2014
(73) Patentinhaber: Robert Bosch GmbH, 70442 Stuttgart (DE)
(72) Erfinder: BRAUN, Rainer, 97980 Bad Mergentheim-Markelsheim (DE)
(86) Internationale Anmeldenummer: PCT/EP2012/070858
(87) Internationale Veröffentlichungsnummer: WO 2013/091931

(56) Entgegenhaltungen:
- JP-A- 2008 038 797
- US-A- 6 093 003
- US-A1- 2011 239 857

## Beschreibung

### Stand der Technik

Die Erfindung betrifft eine Kolbenpumpe für eine Fahrzeugbremsanlage mit einem in einem Zylinder längs einer Achse verschiebbar gelagerten Kolben, an dem ein Einlassventil zum Einleiten von Fluid in den Zylinder und ein Dichtelement zum Abdichten des Kolbens gegen den Zylinder angeordnet sind und der einen ersten Kolbenabschnitt mit einem Ventilsitz des Einlassventils und einen zweiten Kolbenabschnitt als Kolbenstange umfasst. Ferner betrifft die Erfindung eine Verwendung einer derartigen Kolbenpumpe an einem Hydraulikaggregat für eine Fahrzeugbremsanlage.

Aus DE 199 28 913 A1 ist eine Kolbenpumpe bekannt, bei der in einem Pumpengehäuse ein einzelnes Pumpenelement bzw. eine Pumpeneinheit von einem Kolben gebildet ist, der in einer Zylinderbohrung eines Zylinders verschiebbar gelagert ist. Der Kolben saugt Bremsfluid durch eine Zulauföffnung in die Zylinderbohrung hinein und fördert es durch eine Ablauföffnung aus der Zylinderbohrung heraus. Der Kolben ist in die Zylinderbohrung eingeschoben und darin mittels eines Dichtelements zum Zylinder hin abgedichtet. Dieses Dichtelement wird auch als Hochdruckdichtung bezeichnet.

Kolben bekannter Kolbenpumpen weisen teilweise als ein erstes Bauteil einen ersten Kolbenabschnitt auf, an dem sich ein Ventilsitz für ein Einlassventil befindet. Als ein zweites, separates Bauteil weisen solche Kolben einen zweiten Kolbenabschnitt, der die eigentliche Kolbenstange bildet. Diese Kolbenstange wird in der Regel mittels eines Exzenters angetrieben.

Aus US2011/0239857 A1 ist eine Kolbenpumpe mit einem Kolben bekannt, der zwei Kolbenabschnitte umfasst. Ein erster Kolbenabschnitt ist im Durchmesser größer und weist einteilig bzw. einstückig einen Ventilsitz auf. Ein zweiter Kolbenabschnitt ist als Kolbenstange ausgebildet. Ferner ist mit dem ersten Kolbenabschnitt einstückig ein Dichtelement ausgebildet.

Aus US 6 093 003 A ist eine Kolbenpumpe mit einem Kolben bekannt, der einen ersten Kolbenabschnitt mit einem Ventilsitz und einen zweiten, stangenförmigen Kolbenabschnitt aufweist. Ferner ist bei dem Kolben eine dünnwandige Buchse aus Metall vorgesehen, die den ersten Kolbenabschnitt bis hin zum zweiten Kolbenabschnitt axial übergreift und freien Raum innerhalb des Kolbens schafft.

Aus JP 2008 038797 A ist ein zweiteiliger Kolben mit einem einen Ventilsitz und ein Dichtelement umfassenden, ersten Kolbenabschnitt und einem stangenförmigen, zweiten Kolbenabschnitt bekannt.

### Offenbarung der Erfindung

Erfindungsgemäß ist eine Kolbenpumpe für eine Fahrzeugbremsanlage mit einem in einem Zylinder längs einer Achse verschiebbar gelagerten Kolben geschaffen, an dem ein Einlassventil zum Einleiten von Fluid in den Zylinder und ein Dichtelement zum Abdichten des Kolbens gegen den Zylinder angeordnet sind und der einen ersten Kolbenabschnitt mit einem Ventilsitz des Einlassventils und einen zweiten Kolbenabschnitt als Kolbenstange umfasst. Der erste Kolbenabschnitt ist erfindungsgemäß als separates Bauteil gestaltet. Das Dichtelement ist gemäß der Erfindung mit einem den ersten Kolbenabschnitt bis hin zum zweiten Kolbenabschnitt axial vollständig übergreifenden Fortsatz gestaltet.

Mit der erfindungsgemäßen Lösung ist der Kolben der Kolbenpumpe in jenem Kolbenabschnitt übergriffen, an dem sich der Ventilsitz des Einlassventils befindet. Daher ist bei dem Kolben gemäß der Erfindung jener Kolbenabschnitt mit dem Ventilsitz als separates Bauteil gestaltet, der sich zwischen dem Dichtelement und dem zweiten Kolbenabschnitt befindet und muss dennoch nicht einzeln an dem Dichtelement und dem zweiten Kolbenabschnitt montiert werden. Der erfindungsgemäße erste Kolbenabschnitt kann vielmehr insbesondere in den Fortsatz eingesetzt und dann der Fortsatz in einfacher Weise an den zweiten Kolbenabschnitt montiert werden. Auf diese Weise ist am Fortsatz ein Bauteil wie der Ventilsitz, das nur geringe Fertigungstoleranzen aufweisen darf, separat herstellbar und plazierbar.

Die Montage der erfindungsgemäßen Kolbenpumpe wird dadurch einfacher, es können einfachere Bauteile verwendet werden und es kann auch der Ventilsitz kostengünstiger hergestellt werden. Insbesondere kann der den Ventilsitz aufweisende erste Kolbenabschnitt aus einem anderen, kostengünstigeren Material als Stahl hergestellt werden. Ferner kann der Ventilsitz mittels eines einfacheren Spritzgussteils ausgebildet werden. Der Fortsatz ist insbesondere deshalb einstückig mit dem Dichtelement ausgebildet, weil dann beide Elemente in einem einzigen Spritzgießverfahren ausgeformt werden können. Damit kann ein Montageschritt entfallen. Ferner reduziert sich damit die Teilezahl weiter.

Der erfindungsgemäße Fortsatz ist ferner vorteilhaft im Bereich des ersten Kolbenabschnitts durchlässig für Fluid, insbesondere Bremsfluid gestaltet. Der Fortsatz kann dazu als Einlassbereich für Fluid in den Kolben dienen. Besonders bevorzugt weist der Fortsatz eine geschlitzte Form auf. Der derartige Fortsatz kann aus einer Spritzgussform einfach entformt werden. Der erste Kolbenabschnitt bildet dabei bevorzugt einen Einlassbereich zum Einleiten von Fluid in den Kolben bis hin zum Ventilsitz des Einlassventils. Insbesondere ist der erste Kolbenabschnitt dazu hohlzylindrisch bzw. rohrförmig gestaltet und selbst mit einem oder mehreren radial gerichteten Einlässen für zuzuführendes Fluid gestaltet.

An dem Dichtelement oder dessen Fortsatz ist vorzugsweise eine Abdichtung zum ersten Kolbenabschnitt ausgebildet. Mit der Abdichtung ist eine fluiddichte Koppelung zwischen dem ersten Kolbenabschnitt mit dessen Ventilsitz für das Einlassventil und dem Dichtelement geschaffen. Die Abdichtung stellt dann sicher, dass am Einlass zum Zylinder das Einlassventil die einzige Durchflussmöglichkeit für zu förderndes Fluid darstellt.

Bei der erfindungsgemäßen Kolbenpumpe ist ferner vorzugsweise zwischen dem ersten und dem zweiten Kolbenabschnitt ein Längenausgleichselement angeordnet. Mit dem Längenausgleichselement können auf einfache Weise Fertigungstoleranzen ausgeglichen werden, welche sich insbesondere bei der zerspanenden Fertigung eines den Zylinder umgebenden Gehäuses ergeben. Diese Gehäuse werden in der Regel aus einem Aluminiumblock gestaltet, in dem für den Zylinder eine gestufte Aufnahmebohrung ausgebildet wird.

Das Längenausgleichselement ist vorzugsweise als Ringscheibe gestaltet. Eine solche Ringscheibe kann mit geringem Aufwand bei der Montage der erfindungsgemäßen Kolbenpumpe zwischen dem ersten und dem zweiten Kolbenabschnitt eingelegt werden. Alternativ oder zusätzlich zu einem starren bzw. druckfesten Längenausgleichselement kann auch ein flexibles Ausgleichselement, insbesondere in Gestalt eines elastischen Ringes oder einer zumindest teilweise nachgiebigen Phase oder einem Absatz an einem der beteiligten Bauteile vorgesehen sein.

Der erste Kolbenabschnitt ist vorteilhaft axial in Fortsetzung des zweiten Kolbenabschnitts gestaltet. Dies bedeutet, dass der erste Kolbenabschnitt im Querschnitt betrachtet vorteilhaft im Wesentlichen die gleiche radiale Erstreckung und vorzugsweise auch Kontur aufweist, wie der zweite Kolbenabschnitt. Insbesondere weist der erste Kolbenabschnitt vorzugsweise im Querschnitt eine Kreisform mit dem gleichen Durchmesser auf, wie der zweite Kolbenabschnitt.

An der erfindungsgemäßen Kolbenpumpe ist ferner vorzugsweise das Dichtelement mit einem einen Schließkörper des Einlassventils aufnehmenden Ventilkäfig gestaltet. Der Ventilkäfig ist also vorzugsweise einstückig mit dem Dichtelement ausgebildet. Das derart gebildete Bauteil aus Ventilkäfig, Dichtelement und Fortsatz bietet eine Grundstruktur, in die hinein in vorteilhafter Weise aufeinanderfolgend eine Rückstellfeder des Einlassventils, ein Schließkörper des Einlassventil und schließlich der erste Kolbenabschnitt mit dessen Ventilsitz des Einlassventils montiert werden können. Das Bauteil kann dann in einem einzigen Montageschritt an dem zweiten Kolbenabschnitt angebracht werden, wodurch der vollständige Kolben für die erfindungsgemäße Kolbenpumpe gebildet ist. Entsprechend ist vorteilhaft an dem Ventilkäfig ferner eine Rückstellfeder des Einlassventils abgestützt.

Der Fortsatz des Dichtelements ist beim Anbringen an dem zweiten Kolbenabschnitt besonders vorteilhaft an diesem aufgepresst worden. Die Pressung kann an einer automatisierten Fertigungseinrichtung auf kostengünstige Weise ausgebildet werden.

Die erfindungsgemäße Lösung ist gerade wegen der Vorteile in einer automatisierten Fertigung schließlich auch auf eine Verwendung der derart hergestellten Kolbenpumpe an einem Hydraulikaggregat für eine Fahrzeugbremsanlage gerichtet.

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt einer Kolbenpumpe gemäß dem Stand der Technik und
- Fig. 2: einen Längsschnitt einer Kolbenpumpe gemäß der Erfindung.

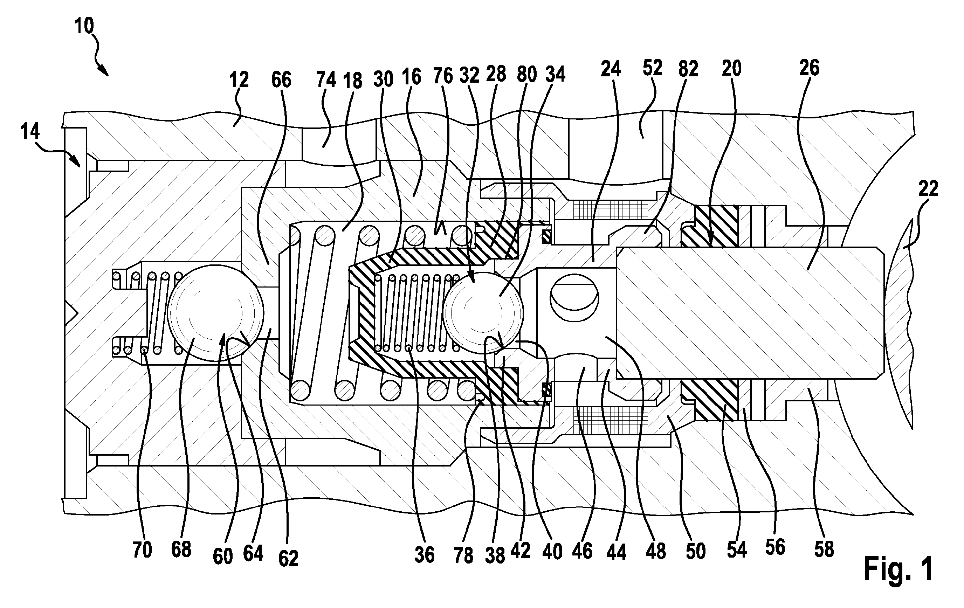

Die Fig. 1 zeigt eine Kolbenpumpe 10 eines weiter nicht veranschaulichten Hydraulikaggregats einer Fahrzeugbremsanlage, das mit einem blockförmigen Gehäuse 12 aus Aluminium gestaltet ist. In dem Gehäuse 12 ist eine gestufte Gehäusebohrung 14 ausgebildet, in der unter anderem ein Zylinder 16 angeordnet ist. Der Zylinder 16 weist eine im Querschnitt kreisrunde Zylinderbohrung 18 auf, in der ein Kolben 20 verschiebbar gelagert ist. Der Kolben 20 dient zum Fördern von Bremsfluid innerhalb des Hydraulikaggregats und in der Fahrzeugbremsanlage und wird dazu von einem Exzenter 22 in der Zylinderbohrung 18 hin und her verschoben.

Der Kolben 20 ist aus einem ersten Kolbenabschnitt 24 und einem zweiten Kolbenabschnitt 26 gebildet und weist ferner ein Dichtelement 28 auf. Mit dem Dichtelement 28 ist ein Ventilkäfig 30 eines Einlassventils 32 einstückig verbunden. Zu dem Einlassventil 32 gehört ferner ein Schließkörper 34, der von einer Rückstellfeder 36 gegen einen Ventilsitz 38 gedrängt wird. Der Ventilsitz 38 umschließt eine Ventilöffnung 40. Die Ventilöffnung 40 ist zusammen mit dem Ventilsitz 38 an dem ersten Kolbenabschnitt 24 angeordnet. Der Kolbenabschnitt 24 ist dabei im Wesentlichen becherförmig mit einem Boden 42 und einer ringförmigen bzw. hohlzylindrischen Wand 44 gestaltet. In der Wand 44 sind mehrere Einlassöffnungen 46 ausgebildet, durch die Bremsfluid von außen in einen Innenraum 48 des becherförmigen ersten Kolbenabschnitts 24 einströmen kann.

Die Einlassöffnungen 46 sind radial außen von einem Ringfilter 50 umgeben, durch den Bremsfluid in den Innenraum 48 zugeleitet werden kann, welches aus einer im Gehäuse 12 ausgebildeten Einlassleitung 52 stammt. Der Ringfilter 50 ist axial einerseits am Zylinder 16 abgestützt und andererseits am Gehäuse 12, wobei er zugleich einen Dichtring 54, einen Stützring 56 und einen Führungsring 58 in der gestuften Zylinderbohrung 18 zurückhält. An dem Führungsring 58 ist der Kolben 20 mit seinem zweiten Kolbenabschnitt 26 radial außen geführt.

Der zweite Kolbenabschnitt 26 bildet dabei eine Kolbenstange, mit der die vom Exzenter 22 ausgehenden Druckkräfte auf den ersten Kolbenabschnitt 24 und weiter auf das Dichtelement 28 übertragen werden. Das Dichtelement 28 wird dann zusammen mit dem ersten Kolbenabschnitt 24 in die Zylinderbohrung 18 hineingedrängt. Es verdrängt dort Bremsfluid, welches zuvor durch das Einlassventil 32 in die Zylinderbohrung 18 eingeströmt war.

Das Bremsfluid gelangt durch ein Auslassventil 60 aus der Zylinderbohrung 18 heraus, das mit einer Ventilöffnung 62 sowie einem zugehörigen Ventilsitz 64 am Boden 66 des Zylinders 16 gestaltet ist. Zu dem Auslassventil 60 gehört ferner ein Schließkörper 68, der mittels einer Rückstellfeder 70 gegen den Ventilsitz 64 gedrängt ist. Die Rückstellfeder 70 ist an einem Zylinderfortsatz 72 abgestützt, mit dem in der Art eines Deckels die Zylinderbohrung 18 außen verschlossen ist. Das durch die Ventilöffnung 62 derart aus dem Zylinder 16 austretende Bremsfluid gelangt unter Druck in eine ebenfalls im Gehäuse 12 ausgestaltete Auslassleitung 74.

Das Dichtelement 28 ist zum Abdichten an einer inneren Mantelfläche 76 der Zylinderbohrung 18 mit einer dort radial außen umlaufenden Dichtlippe 78 gestaltet. Ferner ist das Dichtelement 28 radial innen an dem Boden 42 des ersten Kolbenabschnitts 42 aufgepresst, so dass dort eine Abdichtung 80 geschaffen ist.

Der erste Kolbenabschnitt 24 umgreift mit seinem zum Exzenter 22 gerichteten Endbereich 82 den zweiten Kolbenabschnitt 26 und ist mit diesem an diesem Endbereich 82 verpresst.

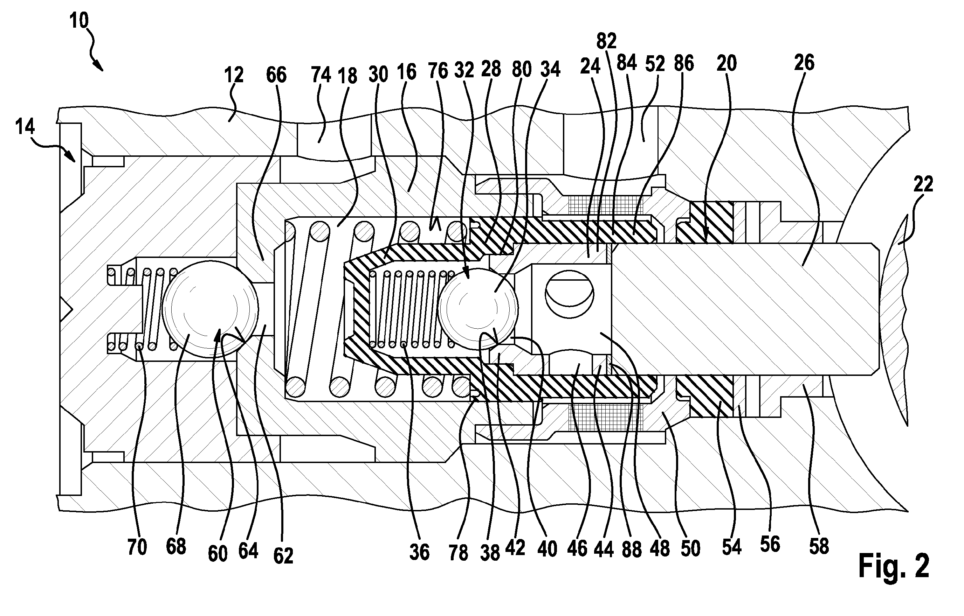

In Fig. 2 ist eine erfindungsgemäße Ausgestaltung einer Kolbenpumpe 10 veranschaulicht, welche weitgehend wie die in Fig. 1 dargestellte Kolbenpumpe 10 gestaltet ist. Bei der Kolbenpumpe 10 gemäß Fig. 2 ist jedoch das Dichtelement 28 mit einem axial in Richtung des Exzenters 22 gerichteten, rohrförmigen Fortsatz 84 gestaltet. Dieser Fortsatz 84 übergreift in axialer Richtung den dortigen ersten Kolbenabschnitt 24 vollständig und ist mit seinem zum Exzenter 22 gerichteten Endbereich 86 auf den zweiten Kolbenabschnitt 26 aufgepresst.

Im Bereich des ersten Kolbenabschnitts 24 ist der Fortsatz 84 für Bremsfluid durchlässig gestaltet, wofür in dem Fortsatz 84 nicht dargestellte axiale Schlitze ausgebildet sind.

Der erste Kolbenabschnitt 24 gemäß der Fig. 2 ist derart gestaltet, dass er vollständig in dem Fortsatz 84 aufgenommen ist und hinsichtlich seiner Querschnittsform als Fortsetzung des zweiten Kolbenabschnitts 26 gestaltet ist. Dabei ist zwischen dem ersten Kolbenabschnitt 24 und dem zweiten Kolbenabschnitt 26, sofern erforderlich, ein Längenausgleichselement 88 in Form einer sehr dünnen Ringscheibe vorgesehen.

## Patentansprüche

1. Kolbenpumpe (10) für eine Fahrzeugbremsanlage mit einem in einem Zylinder (16) längs einer Achse verschiebbar gelagerten Kolben (20), an dem ein Einlassventil (32) zum Einleiten von Fluid in den Zylinder (16) und ein Dichtelement (28) zum Abdichten des Kolbens (20) gegen den Zylinder (16) angeordnet sind und der einen ersten Kolbenabschnitt (24) mit einem Ventilsitz (38) des Einlassventils (32) und einen zweiten Kolbenabschnitt (26) als Kolbenstange umfasst,
**dadurch gekennzeichnet, dass** der erste Kolbenabschnitt (24) als separates Bauteil gestaltet ist und das Dichtelement (28) mit einem den ersten Kolbenabschnitt (24) bis hin zum zweiten Kolbenabschnitt (26) axial vollständig übergreifenden Fortsatz (84) gestaltet ist.

2. Kolbenpumpe nach Anspruch 1,
bei der der Fortsatz (84) im Bereich des ersten Kolbenabschnitts (24) durchlässig für Fluid gestaltet ist.

3. Kolbenpumpe nach Anspruch 1 oder 2,
bei der an dem Dichtelement (28) oder dessen Fortsatz (84) eine Abdichtung (80) zum ersten Kolbenabschnitt (24) ausgebildet ist.

4. Kolbenpumpe nach einem der Ansprüche 1 bis 3,
bei der zwischen dem ersten und dem zweiten Kolbenabschnitt (24; 26) ein Längenausgleichselement (88) angeordnet ist.

5. Kolbenpumpe nach Anspruch 4,
bei der das Längenausgleichselement (88) als Ringscheibe gestaltet ist.

6. Kolbenpumpe nach einem der Ansprüche 1 bis 5,
bei der der erste Kolbenabschnitt (24) axial in Fortsetzung des zweiten Kolbenabschnitts (26) gestaltet ist.

7. Kolbenpumpe nach einem der Ansprüche 1 bis 6,
bei der das Dichtelement (28) mit einem einen Schließkörper (34) des Einlassventils (32) aufnehmenden Ventilkäfig (30) gestaltet ist.

8. Kolbenpumpe nach Anspruch 7,
bei der mit dem Ventilkäfig (30) ferner eine Rückstellfeder (36) des Einlassventils (32) abgestützt ist.

9. Kolbenpumpe nach einem der Ansprüche 1 bis 8,
bei der der Fortsatz (84) des Dichtelements (28) an dem zweiten Kolbenabschnitt (26) aufgepresst ist.

10. Verwendung einer Kolbenpumpe (10) nach einem der Ansprüche 1 bis 9 an einem Hydraulikaggregat für eine Fahrzeugbremsanlage.

## Claims

1. Piston pump (10) for a vehicle brake system having a piston (20) which is mounted in a cylinder (16) such that it can be displaced along an axis, on which piston (20) an inlet valve (32) for introducing fluid into the cylinder (16) and a sealing element (28) for sealing the piston (20) against the cylinder (16) are arranged, and which piston (20) comprises a first piston section (24) with a valve seat (38) of the inlet valve (32) and a second piston section (26) as a piston rod, **characterized in that** the first piston section (24) is configured as a separate component and the sealing element (28) is configured with a projection (84) which reaches axially completely over the first piston section (24) as far as the second piston section (26).

2. Piston pump according to Claim 1, in which the projection (84) is configured to be permeable for fluid in the region of the first piston section (24).

3. Piston pump according to Claim 1 or 2, in which a seal (80) with respect to the first piston section (24) is formed on the sealing element (28) or its projection (84).

4. Piston pump according to one of Claims 1 to 3, in which a length compensation element (88) is arranged between the first and the second piston section (24; 26).

5. Piston pump according to Claim 4, in which the length compensation element (88) is configured as an annular disk.

6. Piston pump according to one of Claims 1 to 5, in which the first piston section (24) is of axial design in a continuation of the second piston section (26).

7. Piston pump according to one of Claims 1 to 6, in which the sealing element (28) is configured with a valve cage (30) which receives a closing body (34) of the inlet valve (32).

8. Piston pump according to Claim 7, in which, furthermore, a restoring spring (36) of the inlet valve (32) is supported by way of the valve cage (30).

9. Piston pump according to one of Claims 1 to 8, in which the projection (84) of the sealing element (28) is pressed onto the second piston section (26).

10. Use of a piston pump (10) according to one of Claims 1 to 9 in a hydraulic assembly for a vehicle brake system.

## Revendications

1. Pompe à piston (10) pour un système de freinage d'un véhicule, comprenant un piston (20) supporté de manière déplaçable le long d'un axe dans un cylindre (16), au niveau duquel sont disposés une soupape d'admission (32) pour l'introduction de fluide dans le cylindre (16) et un élément d'étanchéité (28) pour l'étanchéité du piston (20) par rapport au cylindre (16) et qui comprend une première portion de piston (24) avec un siège de soupape (38) de la soupape d'admission (32) et une deuxième portion de piston (26) en tant que tige de piston,
**caractérisée en ce que** la première portion de piston (24) est configurée sous forme de composant séparé et l'élément d'étanchéité (28) est configuré avec une saillie (84) venant en prise axialement complètement par-dessus la première portion de piston (24) jusqu'à la deuxième portion de piston (26).

2. Pompe à piston selon la revendication 1,
dans laquelle la saillie (84) est configurée de manière perméable aux fluides dans la région de la première portion de piston (24).

3. Pompe à piston selon la revendication 1 ou 2,
dans laquelle un joint d'étanchéité (80) par rapport à la première portion de piston (24) est réalisé au niveau de l'élément d'étanchéité (28) ou de sa saillie (84).

4. Pompe à piston selon l'une quelconque des revendications 1 à 3,
dans laquelle, entre la première et la deuxième portion de piston (24 ; 26), est disposé un élément de compensation de longueur (88).

5. Pompe à piston selon la revendication 4,
dans laquelle l'élément de compensation de longueur (88) est réalisé sous forme de rondelle annulaire.

6. Pompe à piston selon l'une quelconque des revendications 1 à 5,
dans laquelle la première portion de piston (24) est configurée axialement dans le prolongement de la deuxième portion de piston (26).

7. Pompe à piston selon l'une quelconque des revendications 1 à 6,
dans laquelle l'élément d'étanchéité (28) est configuré avec une cage de soupape (30) recevant un corps de fermeture (34) de la soupape d'admission (32).

8. Pompe à piston selon la revendication 7,
dans laquelle un ressort de rappel (36) de la soupape d'admission (32) est en outre supporté par la cage de soupape (30).

9. Pompe à piston selon l'une quelconque des revendications 1 à 8,
dans laquelle la saillie (84) de l'élément d'étanchéité (28) est pressée sur la deuxième portion de piston (26).

10. Utilisation d'une pompe à piston (10) selon l'une quelconque des revendications 1 à 9, dans un groupe hydraulique pour un système de freinage de véhicule.
